# NEW EUROPEAN PATENT SPECIFICATION

(11) **EP 1 036 103 B2**
(45) Date of publication and mention of the opposition decision: **16.07.2008**
(45) Mention of the grant of the patent: 11.09.2002
(21) Application number: 98964426.5
(22) Date of filing: 21.11.1998
(51) Int. Cl.: C08G 18/00

(54) **MODIFIED POLYURETHANE HOTMELT ADHESIVE**
MODIFIZIERTER HEISSSCHMELZPOLYURETHANKLEBSTOFF
ADHESIF THERMOFUSIBLE DE POLYURETHANE MODIFIE

(30) Priority: 01.12.1997 US 67197 P
(43) Date of publication of application: 20.09.2000
(73) Proprietor: Henkel AG & Co. KGaA, 40589 Düsseldorf (DE)
(72) Inventor: KREBS, Michael, D-40724 Hilden (DE); LI, Yingjie, Batavia, IL 60510 (US); SCHEFFLER, Ingolf, D-41470 Neuss (DE)
(86) International application number: PCT/EP1998/007496
(87) International publication number: WO 1999/028363

(56) References cited:
- EP-A- 0 244 608
- EP-A- 0 246 473
- EP-A- 0 340 906
- EP-A- 0 369 607
- EP-A- 0 668 302
- EP-A- 0 777 695
- EP-A- 0 819 711
- EP-A- 0 827 995
- WO-A-91/14727
- WO-A-91/15530
- WO-A-96/06124
- WO-A-96/15170
- DE-A- 2 603 143
- DE-A- 3 933 204
- DE-A- 19 518 656
- GB-A- 2 233 657
- US-A- 3 437 624
- US-A- 3 532 652
- US-A- 4 214 061
- US-A- 4 585 819
- US-A- 4 636 546
- US-A- 5 155 180
- US-A- 5 441 808
- US-A- 5 866 656

## Description

### Field of the invention

This application relates to a quick-setting, moisture-curing polyurethane hotmelt adhesive, to its production and to its use.

### Background of the invention

Moisture-curing or moisture-crosslinking polyurethane hotmelt adhesives are adhesives which are solid at room temperature and which are applied in the form of a melt, their polymeric constituents containing urethane groups and reactive isocyanate groups. Cooling of the melt results initially in rapid physical setting of the adhesive followed by a chemical reaction of the isocyanate groups still present with moisture to form a cross-linked, infusible adhesive. It is only after this chemical curing with moisture, accompanied by an increase in the size of the molecules and/or crosslinking, that the adhesive acquires its final properties. Polyurethane hotmelt adhesives in the narrower sense are largely free of solvents.

The main advantages of hotmelt adhesives over other adhesive systems lies in their very quick setting ability and in the absence of water and solvents in their composition.

Corresponding moisture-curing polyurethane hotmelt adhesives for bonding various substrates are known.

Thus, DE-A-32 36 313 describes a hotmelt adhesive containing a prepolymeric isocyanate, a thermoplastic polymer and a low molecular weight synthetic resin. The prepolymeric isocyanate is a reactive polyurethane prepolymer of an aromatic diisocyanate and/or a prepolymer of this diisocyanate with a short-chain diol and of a polyether or a polyester containing OH groups and a short-chain diol.

This hotmelt adhesive is suitable for the bonding of thermoplastics and thermosets, foams, painted surfaces, rubber, textiles, nonwoven materials, leather, wood, metal and paper. For formulations that are intended to have high initial strengths and to be applied to porous materials, 5 to 40% by weight of the thermoplastic polyurethane has to be added. Unfortunately, this increases the melt viscosity with the result that these adhesives can only be applied by spraying at very high temperatures.

Also known is a moisture-curing hotmelt adhesive consisting of a polyurethane prepolymer A with hard and soft chain segments and terminal isocyanate groups and a urethane prepolymer B with soft chain segments and terminal isocyanate groups. The prepolymer A is prepared in steps from a thermoplastic saturated polyester polyol with a molecular weight of 1,000 to 6,000 and a melting point of 50°C or higher, a polyol with a molecular weight of not more than 8,000 and a diisocyanate. The prepolymer B is prepared from a polyol with a molecular weight of not more than 8,000 and a diisocyanate. This polyol may be liquid at room temperature or may have a melting point below 50°C. 4,4'-diphenyl methane diisocyanate or toluene diisocyanate is said to be particularly preferred as the diisocyanate. Unfortunately, these hotmelt adhesives require an elaborate production process. Either the prepolymer A and the prepolymer B are prepared in a three-stage process or the polymers have to be prepared in separate two-stage or one-stage processes and subsequently mixed. The melt viscosity of these adhesives at 120°C is very high (> 1 million mPas) so that not only are these adhesives expensive to produce, they are also unsuitable for spray application and other applications requiring low melt viscosity.

EP-A-340 906 describes a quick-setting polyurethane hotmelt adhesive consisting of a mixture of at least two amorphous polyurethane prepolymers, the two prepolymers having different glass transition temperatures. The first polyurethane prepolymer preferably has a glass transition temperature above room temperature while the second polyurethane prepolymer has a glass transition temperature below room temperature. The polyurethane prepolymer with the higher glass transition temperature preferably consists of a polyester diol and a polyisocyanate while the polyurethane prepolymer with the lower glass transition temperature preferably consists of a linear or lightly branched polyester or of a polyether. Aromatic diisocyanates, such as 4,4'-diphenyl methane diisocyanate or 2,4-toluene diisocyanate, are said to be preferred diisocyanates. The viscosities of these hotmelt adhesives at 130°C are in the range from at least 30,000 to 90,000 mPas.

According to EP-B-354 527, hotmelt adhesives can be produced from reaction products of polyisocyanates and hydroxypolyesters, the hydroxypolyesters containing more than 50% by weight of a hydroxypolyester A. The hydroxypolyester A is synthesized from aliphatic diols, optionally ether diols and aliphatic dicarboxylic acids containing 8 to 12 methylene groups. The aliphatic dicarboxylic acids may optionally be partly replaced by aromatic dicarboxylic acids, although in a preferred embodiment at least 50 mole-% of the dicarboxylic acids consist of dodecanedioic acid. The very fast setting rate of these hotmelt adhesives is attributable to their rapid recrystallization in the glueline after application from the melt. Preferred fields of application are said to be the shoe industry, the wood-processing industry, the paper industry and the metal processing industry. EP-A-369 607 describes quick-setting, moisture-curing polyurethane hotmelt adhesives based on polyurethanes which contain at least one polyether-based prepolymer with a glass transition temperature above room temperature and a second polyurethane prepolymer with a glass transition temperature below room temperature. The second polyurethane prepolymer may be based on an amorphous polyester, a linear or lightly branched polyether or a polybutadiene. Polyols with a molecular weight of, preferably, 250 to 800 and, more preferably, around 400 are proposed for the polyurethane prepolymer with the high glass transition temperature. This results in relatively high isocyanate contents in the final hotmelt adhesive so that it can only be applied in thin layers to avoid foaming under the effect of the carbon dioxide formed from the isocyanate-moisture reaction.

According to EP-A-248 658, polyurethane hotmelt adhesives can be produced from a reaction product of diisocyanates and crystalline polyester diols, the polyester diols having been prepared from symmetrical aromatic dicarboxylic acids and having an acid component of at least 50 mole-%. In preferred embodiments, the free isocyanate groups are blocked, for example by acetyl acetone. Although this measure reduces the sensitivity of the hotmelt adhesive to moisture and thus increases stability in storage, the setting rate is significantly increased because the isocyanate group first has to be converted back into its reactive form in a deblocking step in view of the application temperature.

EP-A-472 278 describes an adhesive composition consisting of a polyalkylene ether diol, a polyalkylene ether triol, a polyester polyol and an aliphatic isocyanate compound. The isocyanate compound is preferably a non-aromatic, cyclic or linear aliphatic organic polyisocyanate with a functionality of 2 to 4 and preferably 2 to 3. The polyalkylene ether diols are, in particular, polytetramethylene ether diol, polyethylene glycol, polypropylene glycol or polybutylene ether diol, the polytetramethylene glycols being preferred. The polypropylene ether triols are preferred for the polyalkylene ether triols. The preferred polyester polyol is a lactone-based polyester polyol, such as polycaprolactone for example, a polycaprolactone triol from the reaction of caprolactone with trimethylol propane being particularly preferred. The effectiveness of this hotmelt adhesive is attributed to the relatively high crystallinity of the polyester polyol-based urethane segment. The adhesive composition is suitable for use on fabrics, nonwoven materials, wood, metal, leather and plastics. The melt viscosities of the adhesives are not mentioned.

Also, a modified polyurethane adhesive composition has been described consisting of an isocyanate-terminated prepolymer with a molecular weight of at least 1,000 and 2.5 to 100% by weight, based on the above prepolymer, of a dicarbamate ester reaction product of 2 moles of an organic diisocyanate and 1 mole of a low molecular weight dihydroxy compound such as, for example, ethylene glycol, diethylene glycol, propylene glycol, butane-1,4-diol, etc. The dicarbamate ester has to be subsequently added to the polyurethane prepolymer because it cannot be added during polymerization of the prepolymer. This involves an additional working step that makes the product even more expensive to produce. The lamination of films and packaging materials, the lamination of insulating materials and the production of cushioning for the automotive industry are mentioned as typical applications.

EP-A-511 566 describes a polyurethane hotmelt adhesive of a polyfunctional polyether and/or polyester polyol which is liquid or highly viscous at room temperature, a polyfunctional polyol component with a molecular weight of 500 to 10,000, which is crystalline at room temperature, and a mixture of polyisocyanates. The mixture of the polyisocyanate component contains an isocyanate with two differently reactive isocyanate groups and a diisocyanate with an isocyanate reactivity to hydroxyl groups which is greater than that of the less reactive isocyanate group of the polyisocyanate component containing the two differently reactive isocyanate groups. The polyisocyanate component containing the differently reactive isocyanate groups is preferably 2,4-toluene diisocyanate or asymmetrically substituted derivatives of diphenyl methane diisocyanate or isophorone diisocyanate. In a preferred embodiment, the second diisocyanate compound is 4,4'-diphenyl methane diisocyanate or hexamethylene diisocyanate. OH-functional polyester polyols, preferably condensation products of adipic acid with butene-1,4-diol or hexane-1,6-diol, are mentioned as the polyol component crystalline at room temperature. Mixtures of OH-functional polyether polyols, for example polypropylene glycols and/or polyethylene glycols, are mentioned as the polyol component that is liquid or highly viscous at room temperature. The high-viscosity hotmelt adhesives are particularly suitable for the bonding of windowpanes and headlamp diffusers, i.e. glass/plastic composites for the automotive industry. Further particulars of preferred applications are not provided.

Further low viscosity reactive urethane hot melt adhesive compositions are known that consist of:
- a low molecular weight polymers formed from ethylenically unsaturated monomers which do not contain active hydrogen
- a urethane prepolymer having an isocyanate content of 0.25 to 15 % and an isocyanate index greater than 1 and no more than about 2.

This hot melt having a viscosity of 3000 to 50000 mPas at 120 °C can be readily coated to substrates to be bonded. According to this reference, there is no need to incorporate plasticizers and/or tackifiers into the adhesive formulation. In a preferred embodiment, the low molecular weight polymers are formed by polymerization of the ethylenically unsaturated monomers having no active hydrogen in the non-isocyanate containing components of the isocyanate-terminated prepolymer prior to their reaction with the polyisocyanate.

Also disclosed are hotmelt adhesives wherein the low molecular weight polymer of ethylenically unsaturated monomers contains at least one moisture reactive functional group but having no active hydrogen. This functional group may be an alkoxysilane group or an isocyanate group.

Most known moisture-curing polyurethane hotmelt adhesives have serious drawbacks which, hitherto, have been an obstacle to economic use in a number of adhesive applications. The properties in need of improvement are inter alia:
- The adhesive should be able to be applied at low melt temperatures so that heat-sensitive substrates (e.g. polyolefin foams) can be bonded.
- The adhesive should have a low viscosity at the application temperatures to ensure that spraying or roller coaters can also apply it.
- The open time should be readily adjustable to meet customer requirements.
- Inexpensive standard polyether polyols or polyester polyols should be able to be used.
- The production process should be simple, i.e. the number of components required should be as small as possible.
- The product should adhere to many different substrates.
- The adhesive bond should be sufficiently strong and yet flexible in use, in addition to which adequate creep strength should be guaranteed.
- The viscosity of the molten adhesive should be sufficiently stable during production, packaging and application.

While hot melt adhesives made according to the prior art attempt to solve many of the problems listed above, they have significant disadvantages:
- If the low molecular weight polymer incorporated into the adhesive formulation does not contain any functional groups it has no chemical bond into the adhesive backbone after the adhesive is cured. Thus it is readily extractable from the cured adhesive by solvents being in contact with the bond line. Moreover, plasticizers migrating from the interface of the bondline of plasticized substrates also extract significant portions of the low molecular weight polymer of the cured adhesive. This loss of low molecular weight component due to solvent and/or plasticizer contact is highly undesirable, since it changes the physical, chemical and especially mechanical properties of the bondline and thus the performance of the bonded parts.
- If the low molecular weight polymer contains moisture reactive functional groups like alkoxysilanes or isocyanates, they have to be made, stored and handled under anhydrous conditions prior to their incorporation into the hot melt adhesive composition.
- In addition, on exposure to moisture, an alkoxysilane group splits off a monofunctional alcohol which acts as chain stopper for the isocyanate groups from the hot melt composition. Such a chain stopping effectively impairs the crosslinking process, thus reducing the final strength of the cured adhesive.

The problem to be solved by the present invention was to retain the favorable properties of reactive polyurethane hot melt adhesives containing low molecular weight polymers and to improve on their resistance to solvents and/or plasticizers.

### Summary of the invention

The solution according to the invention is defined in the claims and comprises a largely solvent-free moisture-curing polyurethane hot melt composition which is solid at room temperature comprising 95 to 3 % by weight of the reaction product of a polyisocyanate and a low molecular weight copolymer comprising ethylenically unsaturated comonomers, having an average molecular weight below 60 000, wherein said polymer has active hydrogen groups; and said monomers are selected from the group consisting of C₁ to C₁₈-alkylesters of acrylic acid, C₁ to C₁₈-alkylesters of methacrylic acid, acrylic acid, methacrylic acid, hydroxyethylacrylate, hydroxyethylmethacrylate (HEMA), hydroxypropylacrylate, hydroxypropylmethacrylate, hydroxybutylacrylate, hydroxybutylmethacrylate, and/or the corresponding aminofunctional (meth)acrylates, esters of (meth)acrylic acid and glycol oligomers and polymers, esters of (meth)acrylic acid and glycol ethers vinylesters, vinylethers, fumarates, maleates, styrene, alkylstyrenes, butadiene, acrylonitrile and mixtures thereof, 5 to 90 % by weight of at least one polyurethane prepolymer with free isocyanate groups prepared from at least one polyol selected from the group consisting of polyether diols, polyether triols, polyester polyols and mixtures thereof and at least one polyisocyanate, and 0 to 40 % by weight of additives selected from the group consisting of tackifiers, plasticizers, fillers, pigments, stabilizers, adhesion promoters and mixtures thereof, its use and articles of manufacture made therewith.

### Detailed description of the invention

A "polyurethane prepolymer" is understood to be an oligourethane containing reactive isocyanate groups which is formed by the reaction of hydroxyfunctional compounds with a more than stoichiometric quantity of polyisocyanates, thus resulting in compounds with free (reactive) isocyanate groups. Polyisocyanates in this context are preferably low molecular weight compounds containing two isocyanate groups, although they may contain up to 10% by weight of trifunctional and/or higher functional isocyanate. However, unwanted crosslinking may be observed both in the production and in the use of the hotmelt adhesive if the amount of polyisocyanates with functionality of three or more is too high.

Although aromatic polyisocyanates are the most preferred isocyanates, aliphatic and/or cycloaliphatic polyisocyanates may also be used.

Examples of suitable aromatic polyisocyanates include: any isomers of toluene diisocyanate (TDI) either in the form of pure isomers or in the form of a mixture of several isomers, naphthalene-1,5-diisocyanate (NDI), naphthalene-1,4-diisocyanate (NDI), 4,4'-diphenylmethane-diisocyanate (MDI), 2,4'-diphenylmethane-diisocyanate (MDI), xylylenediisocyanate (XDI), 2,2-diphenylpropane-4,4'-diisocyanate, p-phenylene diisocyanate, m-phenylene diisocyanate, diphenyl-4,4'-diisocyanate, diphenylsulphone-4,4'-diisocyanate, 1-chlorobenzene-2,4-diisocyanate, 4,4',4"-triisocyanato-triphenyl-methane, 1,3,5-triisocyanato-benzene, 2,4,6-triisocyanato-toluene and furfurylidene diisocyanate. Examples of suitable cycloaliphatic polyisocyanates include 4,4'-dicyclohexylmethane diisocyanate (H₁₂MDI), 3,5,5-trimethyl-3-isocyanatomethyl-1-isocyanato-cyclohexane (isophorone-diisocyanate, IPDI), cyclohexane-1,4-diisocyanate, cyclohexane-1,2-diisocyanate, hydrogenated xylylene diisocyanate (H₆XDI), m- or p-tetramethylxylylene diisocyanate (m-TMXDI, p-TMXDI) and diisocyanate from dimeracid. Examples of aliphatic isocyanates include hexane-1,6-diisocyanate (HDI), 2,2,4-trimethylhexane-1,6-diisocyanate, 2,4,4-trimethylhexane-1,6-diisocyanate, butane-1,4-diisocyanate and 1,12-dodecane diisocyanate (C₁₂DI). Particularly preferred for maximum formulation stability is a liquid mixture of 4,4'-diphenylmethane-diisocyanate and 2,4'-diphenylmethane-diisocyanate.

Under certain conditions it may be advantageous to use mixtures of the above mentioned polyisocyanates.

Hydroxyfunctional compounds (i.e., "polyols") for making the polyurethane prepolymer may be selected from polyetherpolyols, polyester polyols and/or aromatic polyols.

A "polyether polyol" is understood to be a linear polyether containing predominantly two OH groups. The preferred polyether polyols are diols corresponding to the general formula HO(-R-O)ₘ-H, where R is a hydrocarbon radical containing 2 to 4 carbon atoms and m is in the range from 4 to 225 on average. Specific examples of such polyether polyols include polyethylene glycol, polybutylene glycol, polytetramethylene glycol (polyTHF) and, above all, polypropylene glycol (R = -CH₂CH(CH₃)-). Such polyether polyols may be prepared by known methods such as, for example, polymerization of one or more cyclic ether monomers such as ethylene oxide, propylene oxide, n-butene oxide, and tetrahydrofuran.The polyether polyols may be used both as homopolymers and as copolymers, both as block copolymers and as statistical (random) copolymers. Only one type of polyether polyol is preferably used, although mixtures of 2 to 3 polyether polyols differing in their average molecular weight and/or in the nature of their structural elements may also be used. Small quantities of a trifunctional polyether polyol (i.e., a polyether triol) may also be present in the mixture. The average molecular weight (number average molecular weight) of the polyether polyols is in the range from 200 to 10,000 and preferably in the range from 400 to 6,000.

A "polyester polyol" is understood to be a polyester having more than 1 OH group, preferably 2 terminal OH groups. Preparation is by known routes, either from
a) aliphatic hydroxycarboxylic acids, or from
b) aliphatic and/or aromatic dicarboxylic acids having from 6 to 12 C atoms and - particularly even-numbered - diols having from 4 to 8 C atoms.

Of course, other appropriate derivatives may be used, e.g., lactones, methyl esters or anhydrides. Specific starting materials include: 1,4-butanediol, 1,6-hexanediol, 1,10-decanediol, 1,12-dodecanediol, adipic, azelaic and sebacic acids, 1,10-decanedicarboxylic acid and lactones. The acid component may include up to 25% on a molar basis of other acids, for example, cyclohexanedicarboxylic acid, terephthalic acid and isophthalic acid. The glycol component may include up to 15% on a molar basis of other diols, for example, diethylene glycol and 1,4-cyclohexanedimethanol. In addition to homopolymers from the above components, above all, copolyesters from the following components or derivatives thereof are of importance:
1. adipic acid, isophthalic acid, phthalic acid, and butanediol;
2. adipic acid, phthalic acid and hexanediol;
3. adipic acid, isophthalic acid, phthalic acid, ethylene glycol, neopentylglycol, and 3-hydroxy-2,2-dimethylpropyl-3-hydroxy-2,2-dimethyl propanoate; and
4. adipic acid, phthalic acid, neopentylglycol, and ethylene glycol.

The copolyester from adipic acid, isophthalic acid, phthalic acid, and butanediol is partially crystalline and has a high viscosity. Hence, it results in high initial strength. The copolyester from adipic acid, phthalic acid and hexanediol has low glass transition temperature and therefore, results in improved low-temperature flexibility.

The suitable polyester polyols may optionally be lightly branched, i.e. small quantities of a tricarboxylic acid or trihydric alcohol have been used in their production.

Thus, the polyester polyols are either liquid or solid. In case they are solid, they are preferably amorphous. However, they can be weakly crystalline as well. Preferably, a mixture of partially crystalline and amorphous polyesters is employed. However, crystallinity is developed so weakly that it does not become noticeable as opaqueness in the final hot-melt adhesive. The melting point of the partially crystalline polyester is in the range of from 40 to 70°C, preferably in the range of from 45 to 65°C. The melting point indicates the temperature at which the crystalline regions of the material will melt. It is determined by differential thermoanalysis through the main endothermic peak. Preferably, a polybutanediol adipate having a molecular weight of 3,500 and a melting point of 50°C is used as the partially crystalline polyester glycol.

The average molecular weight (Mn) of the polyester polyol should be between 1,500 and 30,000, preferably between 2,500 and 6,000. It is calculated from the OH number. The molecular weight of the polyester polyol is of some significance: An increasing molecular weight makes extrusion of the hot-melt adhesive and penetration into porous substrates more difficult, and a decreasing molecular weight results in that the hot-melt adhesive is not sufficiently solid at room temperature.

The polyester polyols have a glass transition temperature (Tg) in the range of preferably from -40°C to +50°C and, in particular, in the range of from -40°C to +40°C. The Tg is determined on the basis of DSC measurements as the center point of the step using a ratio of 10°C/min in the second run.

Particularly suitable polyester polyols include those having a glass transition temperature of about -40°C to +40°C, a viscosity of 3,000 to 30,000 mPa.s at 130°C (Brookfield, RVDV II + Thermosel) and a hydroxyl number of 2 to 80, preferably 2 to 40 mg KOH/g.
An "aromatic polyol" is understood to be an alkoxylation product of an aromatic polyhydroxy compound. These are, in particular, the reaction products of ethylene oxide and/or propylene oxide with aromatic dihydroxy compounds such as, for example, hydroquinone, resorcinol, pyrocatechol, bis-(hydroxydiphenyl), bisphenol A, bisphenol F, isomers of dihydroxynaphthalene (pure isomers or a mixture of several isomers), isomers of dihydroxyanthracene (pure isomer or isomer mixture) or isomers of dihydroxyanthraquinone. 1 to 7 alkoxy units have preferably been added per aromatic hydroxy group.

The "low molecular weight copolymer from ethylenically unsaturated comonomers having active hydrogen" is understood to be a copolymer made from the following comonomers C₁ to C₁₈-alkylesters of acrylic acid, C₁ to C₁₈-alkylesters of methacrylic acid, acrylic acid, methacrylic acid, hydroxyethylacrylate, hydroxyethylmethacrylate (HEMA), hydroxypropylacrylate, hydroxypropylmethacrylate, hydroxybutylacrylate, hydroxybutylmethacrylate, esters of (meth)acrylic acid and glycol oligomers and polymers such as di-, tri-, tetra- and/or polyethyleneglycol, esters of (meth)acrylic acid and glycol ethers such as methoxyethanol and/or ethoxyethanol, vinylesters like vinylacetate, vinylpropionate, vinyl esters of highly branched monocarboxylic acids (such as the vinyl ester of the Versatic acid sold by Shell Chemicals), vinylethers, fumarates, maleates, styrene, alkylstyrenes, butadiene as well as acrylonitrile. Instead of or in addition to the hydroxyfunctional (meth)acrylates, the corresponding aminofunctional monomers may be used. The choice of the particular monomer or monomer mixture is largely dependant upon the desired end use of the adhesives including the suitability for the application equipment to be used. "Low molecular weight polymers" in the sense of the present invention means an average molecular weight below 60,000. A preferred average molecular weight range is between 10,000 and 40,000, the most preferred range between 20,000 and 36,000. The average molecular weight is determined by standard gel permeation chromatography (GPC) sometimes also called size exclusion chromatography (SEC). It is the weight average molecular weight (MW) as calibrated against an external polystyrene-standard of certified molecular weight. As mentioned earlier the low molecular weight polymers of the present invention have active hydrogen groups preferrably in the form of OH-groups, however amine groups and/or carboxylic groups may also be present. The amount of active hydrogen groups is determined by their OH-number as specified in DIN 53783. The OH-number of these low molecular weight polymers should be in the range between 0.5 and 20, preferably between 1 and 15, the most preferred range being 2 to 10 mg KOH/g. In terms of weight average hydroxyl functionality, it is preferred that this value be between 0.9 and 8. Particularly preferred is a low molecular weight polymer having a weight average hydroxyl functionality between 1.2 and 5. The weight average hydroxyl functionality is equal to the weight average molecular weight of the polymer times the weight fraction of hydroxy functional monomer (like, hydroxyethylmethacrylate, for example) divided by the molecular weight of the hydroxy functional monomer.

The low molecular weight (MW) copolymers having active hydrogen groups are thermoplastic polymers and may be produced by known procedures, i.e. they may be made by ionic, thermal and preferably by a free radical polymerization. The active hydrogen groups may be incorporated into the copolymer by using a free radical starter having active hydrogen groups and/or by using a chain transfer agent bearing active hydrogen groups. Adding small amounts of comonomers bearing active hydrogen groups such as the above mentioned hydroxyfunctional (meth)acrylate monomers to the monomer mix is a third viable alternative. Whereas the first two methods generate predominantly terminal functional groups, the third method generates functional groups statistically distributed along the polymer chains. Further details for all three methods can be found for example in EP-A-205846 and the references cited there. Since these polymers are produced via free radical polymerization, the functional groups will be randomly distributed on the individual polymer chains.

This implies that, especially with very low OH-numbers, a certain number of copolymer molecules may not bear any functional group whereas others may bear two or more functional groups.

The low MW copolymers with an active hydrogen group may be made according to any known aqueous or anhydrous polymerization process. They may also be polymerized in one or more of the polyether polyol(s) and/or polyester polyol(s).

The hot melt adhesive according to the present invention may additionally comprise one or more of the following: catalysts, stabilizers, tackifying resins, fillers, pigments, plasticizers, adhesion promoters, and/or rheology improvers.

The optional catalysts may accelerate the formation of the polyurethane prepolymer during its production and/or the moisture curing/crosslinking process after application of the hotmelt adhesive. Suitable catalysts are the normal polyurethane catalysts such as, for example, compounds of divalent and tetravalent tin, more particularly the dicarboxylates of divalent tin and the dialkyl tin dicarboxylates and dialkoxylates. Examples of such catalysts are dibutyl tin dilaurate, dibutyl tin diacetate, dioctyl tin diacetate, dibutyl tin maleate, tin(II) octoate, tin(II) phenolate or even the acetyl acetonates of divalent and tetravalent tin. The highly effective tertiary amines or amidines may also be used as catalysts, optionally in combination with the tin compounds mentioned above. Suitable amines are both acyclic and, in particular, cyclic compounds. Examples include tetramethyl butane diamine, bis-(dimethylaminoethyl)-ether, 1,4-diazabicyclooctane (DABCO), 1,8-diazabicyclo-(5.4.0)-undecane, 2,2'-dimorpholinodiethyl ether or dimethyl piperazine or even mixtures of the amines mentioned above.

However, it has been unexpectedly found that for applications requiring optimal machinability, it is desirable to minimize, or eliminate, tin catalysts.

"Stabilizers" in the context of the present invention include stabilizers that stabilize the viscosity of the polyurethane prepolymer during its production, storage and application. Suitable stabilizers of this type include, for example, monofunctional carboxylic acid chlorides, monofunctional highly reactive isocyanates and non-corrosive inorganic acids. Examples of such stabilizers are benzoyl chloride, toluene sulfonyl isocyanate, phosphoric acid or phosphorous acid. In addition, stabilizers in the context of the present invention include antioxidants, UV stabilizers or hydrolysis stabilizers. The choice of these stabilizers is determined on the one hand by the main components of the hotmelt adhesive and on the other hand by the application conditions and by the loads to which the bond is likely to be exposed. When the polyurethane prepolymer is predominantly made up of polyether units, antioxidants - optionally in combination with UV stabilizers - are mainly necessary. Examples of suitable antioxidants include the commercially available sterically hindered phenols and/or thioethers and/or substituted benzotriazoles. In cases where key components of the polyurethane prepolymer consist of polyester units, hydrolysis stabilizers, for example of the carbodiimide type, are preferably used.

Examples of suitable tackifying resins include abietic acid, abietic acid esters, terpene resins, terpene/phenol resins or hydrocarbon resins. Examples for fillers include silicates, talcum, calcium carbonates, clays or carbon black. Suitable rheology improvers imparting thixotropy or sag resistance are for example Bentone (a rheological additive available from Rheox), pyrogenic (fumed) silicas, urea derivatives and fibrillated or pulp chopped fibers.

Although frequently no additional adhesion promoters are required, the above mentioned tackifying resins like abietic acid, terpene resins, terpene/phenol resins or hydrocarbon resins also act as adhesive promoters. In special cases organofunctional silanes like the epoxy functional 3-glycidyl-oxypropyltrialkoxysilane or the isocyanatefunctional isocyanatoethyl trisalkoxysilane, epoxy resins, melamine resins or phenolic resins may be added as adhesion promoters.

The polyurethane hotmelt adhesive composition according to this invention may be prepared, for example, in the following three different ways:
- In a two step procedure, the functional group-containing low comolecular weight polymer from ethylenically unsaturated comonomers and the polyol or polyol mixture are each separately reacted with the polyisocyanate component. In a subsequent step the thus formed isocyanate group tipped prepolymer(s) including the NCO-group tipped low MW polymer are mixed, optionally followed by the blending in of catalysts, stabilizers, tackifying resins, fillers and pigments. It may be necessary to dissolve the low molecular weight copolymer in a low boiling inert solvent prior to reaction with the polyisocyanate. If so, the solvent will be flashed off at a later stage of the production.
   In another embodiment, the functional group- containing low MW copolymer from ethylenically unsaturated comonomers is reacted with a stoichiometric excess of isocyanate in an continuous internal mixer or in an extruder with sufficient residence time to allow complete reaction of the functional groups with the polyisocyanate. The subsequent mixing can also be made in the internal mixer or extruder. It can also be made in any suitable mixer capable of homogenizing high viscosity components under the exclusion of moisture.
- In a one step procedure, the functional group- containing low molecular weight copolymer from ethylenically unsaturated comonomers and the polyol or polyol mixture are homogenized, followed by reaction of this blend with the polyisocyanate. Blending in of the auxiliary components mentioned above may follow.
   The preferred mixing equipment for the one step procedure is also an internal mixer/extruder type mixing equipment since the high viscosity components need to be homogenized quickly especially during and immediately after the addition of the polyisocyanate.
- In a preferred embodiment, the functional group- containing low MW copolymer from ethylenically unsaturated comonomers is mixed with a small portion of the polyol or polyol mixture. The viscosity of this mixture should not exceed 80,000 mPas at 130 °C prior to the addition of polyisocyanate, thus allowing the use of conventional stirred tank mixing equipment. This mixture is then reacted with all of the polyisocyanate followed by the addition of the remaining portion of the polyol or polyol mixtures.
   This procedure avoids the use of solvents during production without risking partial gelation even when using low MW polymers from ethylenically unsaturated monomers having high OH- or NH-functionality. Moreover, during the entire reaction, the viscosity of the composition remains low enough to avoid a high powered extruder as mixing equipment.

The viscosity of the resultant polyurethane hotmelt compositions according to the present invention preferably ranges from 2,000 to 50,000 mPas at 130 °C. As discussed previously, these compositions are solid at room temperature.

Due to their rapid solidification on cooling these adhesives exhibit a high initial adhesive and cohesive strength even before complete curing/crosslinking reaction of the isocyanate groups with moisture from the air and/or from the bonded substrate. This ensures a rapid high handling strength of the bonded substrates which can be readily subjected to further processing operations without the necessity of mechanical fixing and/or fastening.

Due to these properties, the hotmelt adhesives according to this invention can be readily adapted to a variety of applications where hotmelts are commonly used, especially for demanding applications requiring:
- a high degree of heat resistance
- moisture resistance
- resistance to solvent and/or plasticizer attack.

Typical applications include, but not limited to, laminating wood working industry including bonding of wooden panels, automotive interior assembly, roof panel bonding, fabrication of nonwoven fabrics, fabrication of grinding discs and grinding paper.

It is believed, that the superior properties of the hotmelt adhesive according to the present invention are due to the at least partial chemical bonding of the low MW polymer from ethylenically unsaturated monomers to the polyurethane polymer.

### EXAMPLES

The invention will be further illustrated by the following examples. However, it will be understood that these examples are not intended to limit the scope of the invention, they are included to illustrate preferred embodiments of the invention.
A typical formula would be:
25-40 parts by weight (pbw) PPG
10-20 pbw Elvacite 2820
13-19 pbw MDI
15-30 pbw Polyester diol
2 pbw Modaflow 2100
where:
PPG is polypropylene glycol
MDI is either 4,4'- or 2,4'/4,4' mixture
Elvacite 2820 is OH containing Elvacite 2013. It has a CAS# of 35227-05-5. CAS name: poly∼methyl methacrylate/methacrylic acid/2-hydroxyethyl methacrylate/n-butyl methacrylate). Weight average molecular weight around 25K. Functionality average around 1.5-2. Elvacite is a trademark of ICI Acrylics, Wilmington, DE. Modaflow 2100 is a non reactive surface coatings additive available from Monsanto.

### EXAMPLE 1

Was made as described above.
PPG-1025: 38 pbw
Elvacite 2901: 23 pbw
Mondur ML: 17.5 pbw
Modaflow 2100: 1.5 pbw
Ruco S-105-30: 20 pbw

Note:
PPG 1025 is Polypropylene glycol, MW=1000.
Elvacite 2901: Methylmethacrylate/butylmethacrylate copolymer with 1.5 wt% HEMA.
Mondur ML: 2,4'/4,4'-MDI mixture available from Bayer
Modaflow 2100: Flowing agent.
Ruco S-105-30: Poly(hexane adipate) diol available from Ruco. MW∼3500.

### EXAMPLE 2

Was made as described above.

| | |
|---|---|
| PPG-1025 | 18 pbw |
| PPG-2025 | 22 pbw |
| Elvacite 2901 | 25 pbw |
| Mondur ML | 15.7 pbw |
| Modaflow 2100 | 1.5 pbw |
| Ruco S-105-30 | 11.5 pbw |
| Ruco XS-7129 | 6.3 pbw |

Note: PPG-2025 is polypropylene gylcol having a molecular weight of about 2000. Ruco XS-7129 is a polyester diol available from Ruco.

### EXAMPLES 3 TO 9 AND COMPARATIVE EXAMPLE

Reactive hotmelt adhesive compositions were made from the following
- 44.2 pbw polypropylene glycol diol, MW 2000, OH-number 56
- 17.7 pbw poly(hexane adipate)diol, MW ∼ 3500
- 24.5 pbw OH-group containing methacrylate containing copolymer similar to Elvacite 2013
- about 10.2 pbw MDI (2,4'/4,4'-blend)
- 0.03 pbw toluenesulphonylisocyanate as stabilizer.
In the individual formulations, the amount of MDI was adjusted to accommodate an NCO:OH ratio of 1.65.

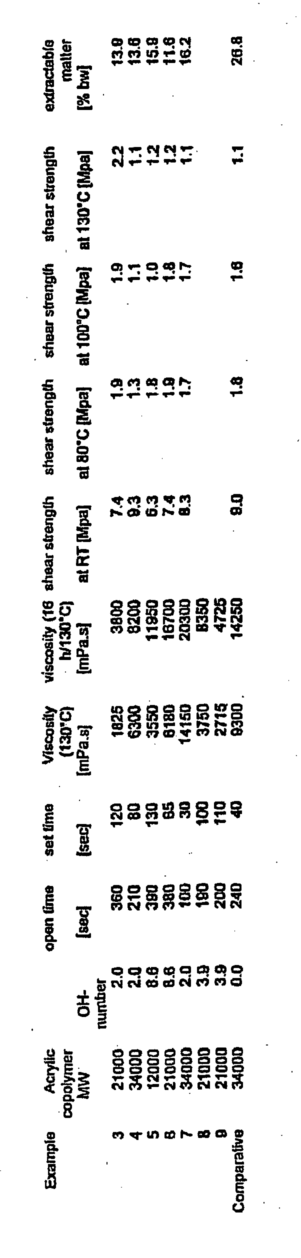

**Table 2**

| Example | soft PVC | Rigid PVC | PE (fluorin.) | paper | ABS light | ABS black | PS |
|---|---|---|---|---|---|---|---|
| | | | | | [Mpa] | [Mpa] | [Mpa] |
| 4 | e | e | g | sf | 6.6 | 5.4 | 6.6 |
| 6 | e | e | g | sf | 6.4 | 3.6 | 5.6 |
| 8 | g | e | f | sf | 6.0 | 3.4 | 5.6 |
| 9 | g | g | f | sf | 4.9 | 5.1 | 5.2 |
| comp. | g | f | p | sf | 4.8 | 4.1 | 5.1 |
| e = excellent | | | | | | | |
| g = good | | | | | | | |
| f = fair | | | | | | | |
| p = poor | | | | | | | |
| sf = substrate failure | | | | | | | |

### Note

The composition of example 7 contained 44.2 pbw of a blend of 79 % bw of polyoxypropylene diol and 21 % bw of polyoxypropylene triol based on total polyetherpolyol in addition to the poly (hexane adipate) diol.

As can be seen from table 1, the hot melt adhesive compositions of examples 2 to 7 are as good as the state of the art, comparative example (containing the non-functional methacrylate copolymer Elvacite 2013) with respect to open time, set time of viscosity range and viscosity stability. Viscosity stability is determined by keeping the adhesive composition (with exclusion of moisture) for 16 hours at 130 °C. Also shear strength after final cure, i. e. after 7 days exposure to moisture at room temperature and elevated temperatures are at least equivalent to the state of the art.

For determining extractable matter from the cured adhesive compositions, cured samples were subjected to soxhlet extraction with methylene chloride for 6 hours. Subsequently the extracted samples were dried in a ventilated oven at 75 °C, to determine the extracted matter by weight loss. The cured samples made from the compositions according to the invention outperform the state of the art composition by a factor of two in terms of reduction of extractable matter.

The adhesives were tested for adhesion properties on the following substrates (see table 2) soft PVC, i. e. plasticized PVC, rigid PVC, polyethylene (PE, fluorine-surface-treated), paper, light colored ABS (acrylonitrile-butadiene-styrene), black colored ABS, PS (polystyrene).

Whereas there is little to no difference in adhesion performance on PS, ABS, paper or soft PVC, the compositions of the present invention exhibit significantly better adhesion to the fluorinated polyethylene and to rigid PVC: Adhesion of the adhesives according to the invention on fluorinated PE or rigid PVC being at least fair or good, whereas the comparative example performed only poor or fair respectively.

Without wishing to be held to any theory, the above formulations are believed to form acrylic urethane block/graft copolymers. In order to create such block/graft copolymers, hydroxyl-containing acrylic polymers were used. These acrylic polymers react with isocyanate to incorporate themselves into the polyurethane prepolymers. These reactive hot melts have excellent performance; the copolymers showed excellent green strength, long processing time and good melt stability, even upon exposure to moisture.

## Claims

1. A solvent-free moisture-curing polyurethane hot melt adhesive composition, wherein said hot melt adhesive composition is solid at room temperature, comprising the product of combining:
a) 95 to 3 % by weight of the reaction product of a first polyisocyanate and a copolymer of ethylenically unsaturated comonomers having an average molecular weight below 60 000, wherein said polymer has active hydrogen groups; and said monomers are selected from the group consisting of C₁ to C₁₈-alkylesters of acrylic acid, C₁ to C₁₈-alkylesters of methacrylic acid, acrylic acid, methacrylic acid, hydroxyethylacrylate, hydroxyethylmethacrylate (HEMA), hydroxypropylacrylate, hydroxypropylmethacrylate, hydroxybutylacrylate, hydroxybutylmethacrylate, and/or the corresponding aminofunctional (meth)acrylates, esters of (meth)acrylic acid and glycol oligomers and polymers, esters of (meth)acrylic acid and glycol ethers vinylesters, vinylethers, fumarates, maleates, styrene, alkylstyrenes, butadiene, acrylonitrile and mixtures thereof.
b) 5 to 90 % by weight of at least one polyurethane prepolymer with free isocyanate groups prepared from at least one polyol selected from the group consisting of polyether diols, polyether triols, polyester polyols, aromatic polyols and mixtures thereof and at least one second polyisocyanate which may be the same as or different from the first polyisocyanate; and
c) 0 to 40 % by weight of at least one additive selected from the group consisting of catalysts, tackifiers, plasticizers, fillers, pigments, stabilizers, adhesion promoters, rheology improvers and mixtures thereof, wherein the sum of a), b) and c) is 100 % by weight.

2. A solvent-free moisture-curing polyurethane hot melt adhesive composition of claim 1, wherein the glycol oligomers and polymers are selected from di-, tri-, tetra and/or polyethylene glycol, and/or the glycol ethers are selected from methoxy ethanol and/or ethoxy ethanol, and/or the vinylesters are selected from vinylacetate, vinylproprionate, vinylesters of highly branched monocarboxylic acids, vinylester of the versatic acid.

3. The hot melt adhesive composition of claim 1 or 2 wherein the polyether diol or triol is selected from the group consisting of polyethyleneoxide-diols, polypropyleneoxide-diols, polyethyleneoxide triols, polypropyleneoxide triols, diol copolymers of ethylene oxide and propylene oxide, triol-copolymers of ethylene oxide and propylene oxide, diols of butyleneoxide, triols of butylene oxide and mixtures thereof.

4. The hot melt adhesive composition of claim 1 to 3, wherein the polyester polyol is an OH-terminated condensation product of C₂-C₁₈-dicarboxylic acids and a diol selected from the group consisting of C₂-C₁₆-alkylene diols, diethylene glycol, triethylene glycol, tetraethyleneglycol, dipropylene glycol, tripropylene glycol, tetrapropylene glycol and mixtures thereof.

5. The hot melt adhesive composition according to claim 4 wherein the polyester polyol component further comprises triols selected from the group consisting of glycerol, trimethylolpropane, triethylolpropane and mixtures thereof.

6. The hot melt adhesive composition of claim 1, wherein the polyester polyol is made from ε-caprolactone.

7. The hot melt adhesive composition of claim 1, wherein the first and second polyisocyanates are selected from the group consisting of toluenediisocyanate, naphthalene-1,5-diisocyanate, naphthalene-1,4-diisocyanate, 4,4'-diphenylmethane-diisocyanate, 2,4'-diphenylmethane-diisocyanate, xylylenediisocyanate, 2,2-diphenylpropane-4,4'-diisocyanate, p-phenylene diisocyanate, m-phenylene diisocyanate, diphenyl-4,4'-diisocyanate, diphenylsulphone-4,4'-diisocyanate, furfurylidene diisocyanate, 1-chlorobenzene-2,4-diisocyanate, 4,4',4"-triisocyanato-triphenyl-methane, 1,3,5-triisocyanato-benzene, 2,4,6-triisocyanato-toluene, 4,4'-dicyclohexylmethane diisocyanate, 3,5,5-trimethyl-3-isocyanatomethyl-1-isocyanato-cyclohexane, cyclohexane-1,4-diisocyanate, cyclohexane-1,2-diisocyanate, hydrogenated xylylene diisocyanate, m- or p-tetramethylxylylene diisocyanate, diisocyanate from dimeracid, hexane-1,6-diisocyanate, 2,2,4-trimethylhexane-1,6-diisocyanate, 2,4,4-trimethylhexane-1,6-diisocyanate, butane-1,4-diisocyanate, 1,12-dodecane diisocyanate and mixtures thereof.

8. The hot melt adhesive composition according to claim 1, wherein the low molecular weight polymer has a hydroxyl number below 15 mg KOH/g as determined according to DIN 53783.

9. The hot melt adhesive composition according to claim 1, wherein the low molecular weight polymer has a hydroxyl number between 0.5 and 20 mg KOH/g as determined according to DIN 53783.

10. The hot melt adhesive composition according to claim 1, wherein the low molecular weight polymer has a hydroxyl number between 1 and 15 mg KOH/g as determined according to DIN 53783.

11. The hot melt adhesive composition according to claim 1, wherein the low molecular weight polymer has a weight average hydroxyl functionality between 0.9 and 8.

12. The hot melt adhesive composition according to claim 1, wherein the low molecular weight polymer has a weight average hydroxyl functionality between 1.2 and 5.

13. The hot melt adhesive composition according to claim 1, wherein the low molecular weight polymer has a weight average molecular weight between 10,000 and 40,000, as determined by gel permeation chromatography.

14. The hot melt adhesive composition according to claim 1, wherein the molecular weight of the low molecular weight polymer is between 20,000 and 36,000, as determined by gel permeation chromatography.

15. The hot melt adhesive composition of claim 1, wherein said composition is essentially free of tin catalysts.

16. The hot melt adhesive composition of claim 1, wherein said first and second polyisocyanates are liquid mixtures of 4,4'-diphenylmethane-diisocyanate and 2,4'-diphenylmethane-diisocyanate.

17. A process for joining substrates with hot melt adhesive, wherein the improvement comprises joining said substrates with the hot melt adhesive of claim 1:

18. Joined substrates, produced by the process of claim 17.

19. A solvent-free moisture-curing polyurethane hot melt adhesive composition according to claim 1, wherein said hot melt adhesive composition is solid at room temperature, comprising the product of combining
a) 95 to 3% by weight of the reaction product of a first aromatic poly isocyanate and a polymer having i) an average molecular weight as determined by gel permeation chromatography of between 10,000 and 40,000, ii) a hydroxyl number between 1 and 15 mg KOH/g, and iii) a weight average hydroxyl functionality between 0.9 and 8 and obtained by polymerizing ethylenically unsaturated monomers wherein at least a portion of the ethylenically unsaturated monomers bear active hydrogen groups;
b) 5 to 90% by weight of at least one polyurethane prepolymer with free isocyanate groups prepared from at least one polyol selected from the group consisting of polyether diols, polyether triols, polyester polyols and mixtures thereof and at least one second aromatic polyisocyanate, wherein the second aromatic polyisocyanate may be the same as or different from the first aromatic polyisocyanate;
c) 0 to 40% by weight of at least one additive selected from the group consisting of tackifiers, plasticizers, fillers; pigments, stabilizers, adhesion promoters, rheology improvers and mixtures thereof, wherein the sum of a), b) and c) is 100% by weight.

20. The hot melt adhesive composition of claim 19 wherein the polymer is comprised of at least one ethylenically unsaturated monomer having an active hydrogen group and selected from the group consisting of acrylic acid, methacrylic acid, hydroxyethyl acrylate, hydroxyethyl methacrylate, hydroxypropyl acrylate, hydroxypropyl methacrylate and mixtures thereof.

21. The hot melt adhesive composition of claim 19, wherein the first and second aromatic polyisocyanates are diphenylmethane-diisocyanates.

22. The hot melt adhesive composition of claim 19, wherein the polyol is a mixture of i) a polyether diol derived from propylene oxide and, optionally, one or more other C2-C₄ epoxides, ii) a poly(ester) diol having a glass transition temperature of from -40°C to +40°C, a viscosity of 3,000 to 30,000 mPa.s at 130°C, and a hydroxyl number of 2 to 40 mg KOH/g and, optionally, iii) a polyether triol derived from propylene oxide and, optionally, one or more other C₂-C₄ epoxides.

23. The hot melt adhesive composition of claim 19, wherein the polymer has an average molecular weight in the range between 20,000 and 36,000, a hydroxyl number in the range between 2 to 10 mg KOH/g, and a weight average hydroxyl functionality in the range between 1.2 and 5.

24. The hot melt adhesive composition of claim 19, wherein the polymer has active hydrogen groups statistically distributed thereon.

25. A solvent-free moisture-curing polyurethane hot melt adhesive composition, according to claim 1 wherein solid hot melt adhesive composition is solid at room temperature, comprising the product of combining
a) 95 to 3% by weight of the reaction product of a first diphenylmethane-diisocyanate and a polymer having i) an average molecular weight as determined by gel permeation chromatography of between 20,000 and 36,000, ii) a hydroxyl number between 2 and 10 mg KOH/g, and iii) a weight average hydroxyl functionality between 1.2 and 5 and obtained by polymerizing ethylenically unsaturated monomers wherein at least a portion of the ethylenically unsaturated monomers are selected from the group consisting of acrylic acid, methacrylic acid, hydroxyethyl acrylate hydroxyethylmethacrylate, hydroxypropyl acrylate, hydroxypropylmethacrylate and mixtures thereof;
b) 5 to 90% by weight of at least one polyurethane prepolymer with free isocyanate groups prepared from a polyol mixture comprised of a polypropylene oxide-diol, a poly (hexane adipate) diol and, optionally, a polypropylene oxide-triol and a second diphenylmethane-diisocyanate, which may be the same as or different from the first diphenyl methane-diisocyanate; and
c) 0 to 40% by weight of at least one additive selected from the group consisting of tackifiers, plasticizers, fillers, pigments, stabilizers, adhesion promoters, rheology improvers and mixtures thereof;
wherein the sum of a), b) and c) is 100% by weight.

## Patentansprüche

1. Lösemittelfreie feuchtigkeitshärtende Polyurethan-Schmelzkleber-Zusammensetzung, die bei Raumtemperatur fest ist und das Produkt der Kombination folgender Bestandteile umfasst
a) 95 - 3 Gew.-% des Reaktionsprodukts eines ersten Polyisocyanats und eines Copolymers aus ethylenisch ungesättigten Comonomeren mit einem Molekulargewicht unter 60 000, wobei dieses Polymer aktive Wasserstoffgruppen aufweist; und diese Monomere der Gruppe entnommen sind, die aus den C₁- bis C₁₈-Alkylestern der Acrylsäure, den C₁- bis C₁₈-Alkylestern der Methacrylsäure, Acrylsäure, Methacrylsäure, Hydroxyethylacrylat, Hydroxyethylmethacrylat (HEMA), Hydroxypropylacrylat, Hydroxypropylmethacrylat, Hydroxybutylacrylat, Hydroxybutylmethacrylat und/oder den entsprechenden aminofunktionellen (Meth)acrylaten, Estern aus der (Meth)acrylsäure und Glycol-Oligomeren und -Polymeren, Estern aus der (Meth)acrylsäure und Glycolethern, Vinylestern, Vinylethern, Fumaraten, Maleaten, Styrol, Alkylstyrolen, Butadien, Acrylnitril und Gemischen dieser Verbindungen besteht;
b) 5 - 90 Gew.-% mindestens eines Polyurethan-Präpolymers mit freien Isocyanatgruppen, hergestellt aus mindestens einem Polyol aus der Gruppe der Polyetherdiole, Polyethertriole, Polyesterpolyole, aromatischen Polyole und deren Gemischen sowie mindestens einem zweiten Polyisocyanat, das mit dem ersten Polyisocyanat identisch oder von diesem verschieden sein kann; und
c) 0-40 Gew.-% mindestens eines Additivs aus der Gruppe der Katalysatoren, Klebrigmacher, Weichmacher, Füller, Pigmente, Stabilisatoren, Haftverbesserer, Rheologieverbesserer und Mischungen derselben, und zwar dergestalt, dass die Summe aus a), b) und c) insgesamt 100 Gew.-% ergibt.

2. Lösemittelfreie feuchtigkeitshärtende Polyurethan-Schmelzkleber-Zusammensetzung gemäß Anspruch 1, wobei die Glycol-Oligomere und - Polymere aus Di-, Tri-, Tetra- und/oder Polyethylenglycol ausgewählt sind und/oder die Glycolether aus Methoxyethanol und/oder Ethoxyethanol ausgewählt sind und/oder die Vinylester aus Vinylacetat, Vinylpropionat, Vinylestern von stark verzweigten Monocarbonsäuren, Vinylester der Versatinsäure ausgewählt sind.

3. Schmelzkleber-Zusammensetzung gemäß Anspruch 1 oder 2, wobei das Polyetherdiol oder -triol der Gruppe der Polyethylenoxiddiole, Polypropylenoxiddiole. Polyethylenoxidtriole, Polypropylenoxidtriole, Diol-Copolymere von Ethylenoxid und Propylenoxid, Triol-Copolymere von Ethylenoxid und Propylenoxid, Butylenoxid-Diole, Butylenoxid-Triole und Gemischen dieser Verbindungen entnommen ist.

4. Schmelzkleber-Zusammensetzung gemäß den Ansprüchen 1 bis 3, wobei es sich bei dem Polyester-Polyol um ein OH-Endgruppen aufweisendes Kondensationsprodukt von C₂-C₁₈-Dicarbonsäuren und einem Diol aus der Gruppe handelt, die aus C₂-C₁₆-Alkylendiolen, Diethylenglycol, Triethylenglycol, Tetraethylenglycol, Dipropylenglycol, Tripropylenglycol, Tetrapropylenglycol und Gemischen dieser Verbindungen besteht.

5. Schmelzkleber-Zusammensetzung gemäß Anspruch 4, wobei die Polyesterpolyol-Komponente zusätzlich Triole aus der Gruppe umfasst, die aus Glycerin, Trimethylolpropan, Triethylolpropan und Gemischen dieser Verbindungen besteht.

6. Schmelzkleber-Zusammensetzung gemäß Anspruch 1, wobei das Polyester-Polyol aus ε-Caprolacton hergestellt ist.

7. Schmelzkleber-Zusammensetzung gemäß Anspruch 1, wobei das erste und zweite Polyisocyanat der Gruppe entnommen sind, die aus Toluendiisocyanat, Napthalin-1,5-düsocyanat, Naphthalin-1,4-düsocyanat, 4,4'-Diphenylmethandilsocyanat, 2,4'-Diphenylmethandiisocyanat, Xylylendiisocyanat, 2,2-Diphenylpropan-4,4'-diisocyanat, p-Phenylendiisocyanat, m-Phenylendiisocyanat, Diphenyl-4,4'-diisocyanat, Diphenylsulfon-4,4'-diisocyanat, Furfurylidendiisocyanat, 1-Chlorbenzol-2,4-diisocyanat, 4,4',4"-Triisocyanatotriphenylmethan, 1,3,5-Triisocyanoatobenzol, 2,4,6-Triisocyanatotoiuoi, 4,4'-Dicyclohexylmethandiisocyanat, 3,5,5-Trimethyl-3-isocyanatomethyl-1-isocyanatocyclohexan, Cyclohexan-1,4-diisocyanat, Cyclohexan-1,2-diisocyanat, hydriertes Xylylendiisocyanat, m- oder p-Tetramethylxylylendiisocyanat, Diisocyanat aus Dimersäure, Hexan-1,6-diisocyanat, 2,2,4-Trimethylhexan-1,6-diisocyanat, 2,4,4-Trimethylhexan-1,6-diisacyanat, Butan-1,4-diisocyanat, 1,12-Dodecandiisocyanat und Gemischen dieser Verbindungen besteht.

8. Schmelzkleber-Zusammensetzung gemäß Anspruch 1, wobei das Copolymer von niedrigem Molekulargewicht eine (nach DIN 53783 bestimmte) Hydroxylzahl kleiner 15 mg KOH/g aufweist.

9. Schmelzkleber-Zusammensetzung gemäß Anspruch 1, wobei das Copolymer von niedrigen Molekulargewicht eine (nach DIN 53783 bestimmte) Hydroxylzahl zwischen 0,5 und 20 mg KOH/g aufweist.

10. Schmelzkleber-Zusammensetzung gemäß Anspruch 1, wobei das Copolymer von niedrigem Molekulargewicht eine (nach DIN 53783 bestimmte) Hydroxylzahl zwischen 1 und 15 mg KOH/g aufweist.

11. Schmelzkleber-Zusammensetzung gemäß Anspruch 1, wobei das Copolymer von niedrigem Molekulargewicht eine gewichtsmittlere Hydroxylfunktionalität zwischen 0,9 und 8 aufweist.

12. Schmelzkleber-Zusammensetzung gemäß Anspruch 1, wobei das Copolymer von niedrigem Molekulargewicht eine gewichtsmittlere Hydroxylfunktionalität zwischen 1,2 und 5 aufweist.

13. Schmelzkleber-Zusammensetzung gemäß Anspruch 1, wobei das Copolymer von niedrigem Molekulargewicht ein (mittels Gel-Permeationschromatographie bestimmtes) mittleres Molekulargewicht zwischen 10 000 und 40 000 aufweist.

14. Schmelzkleber-Zusammensetzung gemäß Anspruch 1, wobei das Copolymer von niedrigem Molekulargewicht ein (mittels Gel-Permeationschromatographie bestimmtes) mittleres Molekulargewicht zwischen 20 000 und 36 000 aufweist.

15. Schmelzkleber-Zusammensetzung gemäß Anspruch 1, wobei diese Zusammensetzung im Wesentlichen frei von Zinnkatalysatoren ist.

16. Schmelzkleber-Zusammensetzung gemäß Anspruch 1, wobei es sich bei dem genannten ersten und zweiten Polyisocyanat um flüssige Gemische von 4,4'-Diphenylmethandiisocyanat und 2,4'-Diphenylmethandiisocyanat handelt.

17. Verfahren zur Verbindung von Substraten mittels Schmelzkleber, wobei die Verbesserung darin besteht, dass diese Verbindung der Substrate mittels des Schmelzklebers aus Anspruch 1 hergestellt wird.

18. Verbundene Substrate, die mit dem Verfahren aus Anspruch 17 hergestellt werden.

19. Lösemittelfreie feuchtigkeitshärtende Polyurethan-Schmelzkleber-Zusammensetzung gemäß Anspruch 1, die bei Raumtemperatur fest ist und das Produkt der Kombination folgender Bestandteile umfasst:
a) 95 - 3 Gew.-% des Reaktionsprodukts eines ersten aromatischen Polyisocyanats und eines Copolymers, das (i) ein mittleres Molekulargewicht (bestimmt mittels Gel-Permeationschromatographie) zwischen 10 000 und 40 000, (ii) eine Hydroxylzahl zwischen 1 und 15 mg KOH/g sowie (iii) eine gewichtsmittlere Hydroxylfunktionalität zwischen 0,9 und 8 aufweist und durch Polymerisation ethylenisch ungesättigter Monomere hergestellt wird, wobei mindestens ein Teil dieser ethylenisch ungesättigten Monomeren aktive Wasserstoffgruppen trägt;
b) 5 - 90 Gew.-% mindestens eines Polyurethan-Präpolymers mit freien Isocyanatgruppen, hergestellt aus mindestens einem Polyol aus der Gruppe der Polyetherdiole, Polyethertriole, Polyesterpolyole und deren Gemische sowie mindestens einem zweiten aromatischen Polyisocyanat, das mit dem ersten aromatischen Polyisocyanat identisch oder von diesem verschieden sein kann;
c) 0 - 40 Gew.-% mindestens eines Additivs aus der Gruppe der Klebrigmacher, Weichmacher, Füller, Pigmente, Stabilisatoren, Haftverbesserer, Rheologieverbesserer und Mischungen derselben, wobei die Summe aus a), b) und c) insgesamt 100 Gew.-% ergibt.

20. Schmelzkleber-Zusammensetzung gemäß Anspruch 19, wobei das Copolymer aus mindestens einem ethylenisch ungesättigten Monomer mit einer aktiven Wasserstoffgruppe aufgebaut ist und der Acrylsäure, Methacrylsäure, Hydroxyethylacrylat, Hydroxyethylmethacrylat, Hydroxypropylacrylat, Hydroxypropylmethacrylat und Gemischen dieser Verbindungen enthaltenden Gruppe entnommen ist.

21. Schmelzkleber-Zusammensetzung gemäß Anspruch 19, wobei es sich bei dem ersten und zweiten Polyisocyanat um Diphenylmethandüsocyanate handelt.

22. Schmelzkleber-Zusammensetzung gemäß Anspruch 19, wobei es sich bei dem Polyol um ein Gemisch aus (i) einem von Propylenoxid und ggf. einem oder mehreren C₂- bis C₄-Epoxiden abgeleiteten Polyetherdiol, (ii) einem Poly(ester)diol mit einer Glasübergangstemperatur zwischen -40°C und +40°C, einer Viskosität zwischen 3 000 und 30 000 mPa.s bei 130°C und einer Hydroxylzahl von 2 - 40 mg KOH/g sowie optional (iii) einem von Propylenoxid und wahlweise einem oder mehreren C₂- bis C₄-Epoxiden abgeleiteten Polyethertriol handelt.

23. Schmelzkleber-Zusammensetzung gemäß Anspruch 19, wobei das Copolymer ein mittleres Molekulargewicht im Bereich 20 000 - 36 000, eine Hydroxylzahl im Bereich 2 - 10 mg KOH/g sowie eine gewichtsmittlere Hydroxylfunktionalität zwischen 1,2 und 5 aufweist.

24. Schmelzkleber-Zusammensetzung gemäß Anspruch 19, wobei das Copolymer über aktive Wasserstoffgruppen verfügt, die daran statistisch verteilt sind.

25. Lösemittelfreie feuchtigkeitshärtende Polyurethan-Schmelzkleber-Zusammensetzung gemäß Anspruch 1, die bei Raumtemperatur fest ist und das Produkt der Kombination folgender Bestandteile umfasst:
a) 95 - 3 Gew.-% des Reaktionsprodukts eines ersten Diphenylmethandiisocyanats und eines Copolymers, das (i) ein mittleres Molekulargewicht (bestimmt mittels Gel-Permeationschromatographie) zwischen 20 000 und 36 000, (ii) eine Hydroxylzahl zwischen 2 und 10 mg KOH/g sowie (iii) eine gewichtsmittlere Hydroxylfunktionalität zwischen 1,2 und 5 aufweist und durch Polymerisation ethylenisch ungesättigter Monomere hergestellt wird, wobei mindestens ein Teil dieser ethylenisch ungesättigten Monomere aus der Acrylsäure, Methacrylsäure, Hydroxyethylacrylat, Hydroxyethylmethacrylat, Hydroxypropylacrylat, Hydroxypropylmethacrylat und Gemischen dieser Verbindungen enthaltenden Gruppe ausgewählt wird.
b) 5 - 90 Gew.-% mindestens eines Polyurethan-Präpolymers mit freien Isocyanatgruppen, hergestellt aus mindestens einem Polyolgemisch, das ein Polypropylenoxid-Diol, ein Poly(hexanadipat)diol und wahlweise ein Polypropylenoxid-Triol sowie ein zweites Diphenylmethandiisocyanat umfasst, das mit dem ersten Diphenylmethandüsocyanat identisch oder von diesem verschieden sein kann; und
c) 0 - 40 Gew.-% mindestens eines Additivs aus der Gruppe der Klebrigmacher, Weichmacher, Füller, Pigmente, Stabilisatoren, Haftverbesserer, Rheologieverbesserer und Mischungen derselben;
wobei die Summe aus a), b) und c) insgesamt 100 Gew.-% ergibt.

## Revendications

1. Composition d'adhésif thermofusible à base de polyuréthane, sans solvant et durcissant à l'humidité, ladite composition d'adhésif thermofusible étant solide à la température ambiante, qui comprend le produit de l'association de:
a) 95 à 3 % en poids du produit de réaction d'un premier polyisocyanate et d'un polymère de comonomères à insaturation éthylénique ayant une masse moléculaire moyenne inférieure à 60.000, ledit polymère comportant des atomes d'hydrogène actif ; et lesdits monomères sont choisis parmi le groupe constitué par des esters alkyliques en C₁-C₁₈ de l'acide acrylique, des esters alkyliques en C₁-C₁₈ de l'acide méthacrylique, l'acide acrylique, l'acide méthacrylique, l'acrylate d'hydroxyéthyle, le méthacrylate d'hydroxyéthyle (HEMA), l'acrylate d'hydroxypropyle, le méthacrylate d'hydroxypropyle, l'acrylate d'hydroxybutyle, le méthacrylate d'hydroxybutyle et/ou les (méth)acrylates correspondants contenant une fonctionnalité amino, des esters de l'acide (méth)acrylique et des oligomères et des polymères de glycol, des esters de l'acide (méth)acrylique et des éthers de glycol, des esters vinyliques, des éthers vinyliques, des fumarates, des maléates, le styrène, des alkylstyrènes, le butadiène, l'acrylonitrile et leurs mélanges ;
b) 5 à 90 % en poids d'au moins un prépolymère de polyuréthane comportant des groupes isocyanate libres, préparé à partir d'au moins un polyol choisi dans le groupe constitué par des polyétherdiols, polyéthertriols, polyesterpolyols, polyols aromatiques et mélanges de ceux-ci, et d'au moins un second polyisocyanate qui peut être le même que le premier polyisocyanate ou différent de celui-ci ; et
c) 0 à 40 % en poids d'au moins un additif choisi dans le groupe constitué par des catalyseurs, agents collants, plastifiants, charges, pigments, stabilisateurs, promoteurs d'adhérence, agents d'amélioration de la rhéologie et des mélanges de ceux-ci, la somme de a), b) et c) étant de 100 % en poids.

2. Composition d'adhésif thermofusible à base de polyuréthane, sans solvant et durcissant à l'humidité selon la revendication 1, dans laquelle les oligomères et les polymères de glycol sont choisis parmi des di-, tri-, tétra- et/ou polyéthylèneglycols, et/ou les éthers de glycol sont choisis parmi le méthoxyéthanol et/ou l'éthoxyéthanol, et/ou les esters vinyliques sont choisis parmi l'acétate de vinyle, le propionate de vinyle, des esters vinyliques d'acides monocarboxyliques fortement ramifiés, des esters vinyliques de l'acide versatique.

3. Composition d'adhésif thermofusible selon la revendication 1 ou 2, dans laquelle le polyéther-diol ou -triol est choisi dans le groupe constitué par des polyoxyéthylène-diols, polyoxypropylène-diols, polyoxyéthylène-triols, polyoxypropylène-triols, copolymères de diols d'oxyde d'éthylène et d'oxyde de propylène, copolymères de triols d'oxyde d'éthylène et d'oxyde propylène, diols d'oxyde de butylène, triols d'oxyde de butylène et des mélanges de ceux-ci.

4. Composition d'adhésif thermofusible selon les revendications 1 à 3, dans laquelle le polyesterpolyol est un produit de condensation terminé par des groupes OH, d'acides dicarboxyliques en C₂-C₁₈ et d'un diol choisi dans le groupe constitué par des alkylène(C₂-C₁₆)-diols, le diéthylèneglycol, le triéthylèneglycol, le tétraéthylèneglycol, le dipropylèneglycol, le tripropylèneglycol, le tétrapropylèneglycol et des mélanges de ceux-ci.

5. Composition d'adhésif thermofusible selon la revendication 4, dans laquelle le composant de polyesterpolyol comprend en outre des triols choisis dans le groupe constitué par le glycérol, le triméthylolpropane, le triéthylolpropane et des mélanges de ceux-ci.

6. Composition d'adhésif thermofusible selon la revendication 1, dans laquelle le polyesterpolyol est formé à partir d'ε-caprolactone.

7. Composition d'adhésif thermofusible selon la revendication 1, dans laquelle le premier polyisocyanate et le second sont choisis dans le groupe constitué par le toluène-düsocyanate, le naphtalène-1,5-diisocyanate, le naphtalène-1,4-diisocyanate, le 4,4'-diphénylméthane-diisocyanate, le 2,4'-diphénylméthane-diisocyanate, le xylylènediisocyanate, le 2,2-diphénylpropane-4,4'-diisocyanate, le p-phénylènediisocyanate, le m-phénylènediisocyanate, le diphényl-4,4'-diisocyanate, le diphénylsulfone-4,4'-diisocyanate, le furfurylidène-diisocyanate, le 1-chlorobenzène-2,4-diisocyanate, le 4,4',4"-triisocyanatotriphénylméthane, le 1,3,5-triisocyanatobenzène, le 2,4.6-triisocyanatotoluène, le 4,4'-dicyclohexylméthane-diisocyanate, le 3,5,5-tri-méthyl-3-isocyanatométhyl-1-isocyanatocyclohexane, le cyclohexane-1,4-diisocyanate, le cyclohexane-1,2-diisocyanate, le xylylènediisocyanate hydrogéné, le m- ou p-tétraméthylxylylènediisocyanate, le diisocyanate provenant d'un acide dimère, l'hexane-1,6-diisocyanate, le 2,2,4-triméthylhexane-1,6-diisocyanate, le 2,4,4-triméthylhexane-1,6-diisocyanate, le butane-1,4-diisocyanate, le 1,12-dodécane-diisocyanate et des mélanges de ceux-ci.

8. Composition d'adhésif thermofusible selon la revendication 1, dans laquelle le copolymère de faible masse moléculaire possède un indice d'hydroxyle inférieur à 15 mg de KOH/g, tel que déterminé selon DIN 53783.

9. Composition d'adhésif thermofusible selon la revendication 1, dans laquelle le copolymère de faible masse moléculaire possède un indice d'hydroxyle entre 0,5 et 20 mg de KOH/g, tel que déterminé selon DIN 53783.

10. Composition d'adhésif thermofusible selon la revendication 1, dans laquelle le copolymère de faible masse moléculaire possède un indice d'hydroxyle entre 1 et 15 mg de KOH/g, tel que déterminé selon DIN 53783.

11. Composition d'adhésif thermofusible selon la revendication 1, dans laquelle le copolymère de faible masse moléculaire possède une fonctionnalité hydroxyle moyenne en poids entre 0,9 et 8.

12. Composition d'adhésif thermofusible selon la revendication 1, dans laquelle le copolymère de faible masse moléculaire possède une fonctionnalité hydroxyle moyenne en poids entre 1,2 et 5.

13. Composition d'adhésif thermofusible selon la revendication 1, dans laquelle le copolymère de faible masse moléculaire possède une masse moléculaire moyenne en poids entre 10.000 et 40.000, telle que déterminée par chromatographie par perméation de gel.

14. Composition d'adhésif thermofusible selon la revendication 1, dans laquelle la masse moléculaire du copolymère de faible masse moléculaire se situe entre 20.000 et 36.000, telle que déterminée par chromatographie par perméation de gel.

15. Composition d'adhésif thermofusible selon la revendication 1, dans laquelle ladite composition est essentiellement dépourvue de catalyseurs à base d'étain.

16. Composition d'adhésif thermofusible selon la revendication 1, dans laquelle lesdits premiers et second polyisocyanates sont des mélanges liquides du 4,4'-diphénylméthane-düsocyanate et du 2,4'-diphénylméthane-düsocyanate.

17. Procédé pour l'assemblage de substrats avec un adhésif thermofusible, dans lequel l'amélioration comprend l'assemblage desdits substrats avec l'adhésif thermofusible selon la revendication 1.

18. Substrats assemblés produits par le procédé selon la revendication 17.

19. Composition d'adhésif thermofusible à base de polyuréthane sans solvant et durcissant à l'humidité, selon la revendication 1, dans laquelle ladite composition d'adhésif thermofusible est solide à la température ambiante et comprend le produit de l'association de
a) 95 à 3 % en poids du produit de réaction d'un premier polyisocyanate aromatique et d'un copolymère ayant i) une masse moléculaire moyenne, telle que déterminée par chromatographie par perméation de gel, entre 10.000 et 40.000, ii) un indice d'hydroxyle entre 1 et 15 mg de KOH/g, et iii) une fonctionnalité hydroxyle moyenne en poids entre 0,9 et 8, et obtenu par polymérisation de monomères à insaturation éthylénique, au moins une partie des monomères à insaturation éthylénique portant des atomes d'hydrogène actif ;
b) 5 à 90 % en poids d'au moins un prépolymère polyuréthane comportant des groupes isocyanate libres, préparé à partir d'au moins un polyol choisi dans le groupe constitué par des polyéthers diols, polyéthers triols, polyesterpolyols et des mélanges de ceux-ci, et d'au moins un second polyisocyanate aromatique, le second polyisocyanate aromatique pouvant être identique au premier polyisocyanate aromatique ou différent de celui-ci ;
c) 0 à 40 % en poids d'au moins un additif choisi dans le groupe constitué par des agents collants, des plastifiants, des charges, des pigments, des stabilisateurs, des promoteurs d'adhérence, des agents améliorant la rhéologie et des mélanges de ceux-ci, la somme de a), b) et c) étant de 100 % en poids.

20. Composition d'adhésif thermofusible selon la revendication 19, dans laquelle le copolymère comprend au moins un monomère à insaturation éthylénique comportant un atome d'hydrogène actif et choisi parmi le groupe constitué par l'acide acrylique, l'acide méthacrylique, l'acrylate d'hydroxyéthyle, le méthacrylate d'hydroxyéthyle, l'acrylate d'hydroxypropyle, le méthacrylate d'hydroxypropyle et des mélanges de ceux-ci.

21. Composition d'adhésif thermofusible selon la revendication 19, dans laquelle le premier polyisocyanate aromatique et le second sont des diphénylméthane-diisocyanates.

22. Composition d'adhésif thermofusible selon la revendication 19, dans laquelle le polyol est un mélange de i) un polyéther diol dérivé d'oxyde de propylène et éventuellement d'un ou plusieurs autres époxydes en C₂-C₄, ii) d'un poly(ester)diol ayant une température de transition vitreuse de -40°C à +40°C, une viscosité de 3.000 à 30.000 mPa.s à 130 °C et un indice d'hydroxyle de 2 à 40 mg de KOH/g, et éventuellement iii) d'un polyéther triol dérivé d'oxyde de propylène, et éventuellement d'un ou plusieurs autres époxydes en C₂-C₄.

23. Composition d'adhésif thermofusible selon la revendication 19, dans laquelle le copolymère possède une masse moléculaire moyenne dans la plage entre 20.000 et 36.000, un indice d'hydroxyle dans la plage entre 2 et 10 mg de KOH/g, et une fonctionnalité hydroxyle moyenne en poids dans la plage entre 1,2 et 5.

24. Composition d'adhésif thermofusible selon la revendication 19, dans laquelle le copolymère comporte des atomes d'hydrogène actif, sous la forme d'une distribution statistique.

25. Composition d'adhésif thermofusible à base de polyuréthane, sans solvant et durcissant à l'humidité, selon la revendication 1, la composition d'adhésif thermofusible étant solide à la température ambiante, qui comprend le produit de l'association de
a) 95 à 3 % en poids du produit de réaction d'un premier diphénylméthane-diisocyanate et d'un copolymère ayant i) une masse moléculaire moyenne, déterminée par chromatographie par perméation de gel, entre 20.000 et 36.000, ii) un indice d'hydroxyle entre 2 et 10 mg de KOH/g, et iii) une fonctionnalité hydroxyle moyenne en poids entre 1,2 et 5, et obtenu par polymérisation de monomères à insaturation éthylénique, au moins une partie des monomères à insaturation éthylénique étant choisie parmi le groupe constitué par l'acide acrylique, l'acide méthacrylique, l'acrylate d'hydroxyéthyle, le méthacrylate d'hydroxyéthyle, l'acrylate d'hydroxypropyle, le méthacrylate d'hydroxypropyle et des mélanges de ceux-ci ;
b) 5 à 90 % en poids d'au moins un prépolymère de polyuréthane comportant des groupes isocyanates libres, préparé à partir d'un mélange de polyols comprenant un polyoxypropylènediol, un poly (hexane adipate) diol et éventuellement un polyoxypropylène triol et un second diphénylméthane-düsocyanate, qui peut être le même que le premier diphénylméthane-düsocyanate ou différent de celui-ci ; et
c) 0 à 40 % en poids d'au moins un additif choisi parmi le groupe constitué par des agents collants, des plastifiants, des charges, des pigments, des stabilisateurs, des promoteurs d'adhérence, des agents améliorant la rhéologie et des mélanges de ceux-ci ;
la somme de a), b) et c) étant de 100 % en poids.
